# EUROPÄISCHE PATENTSCHRIFT

(11) **EP 1 530 532 B1**
(45) Veröffentlichungstag und Bekanntmachung des Hinweises auf die Patenterteilung: **20.10.2010**
(21) Anmeldenummer: 03787783.4
(22) Anmeldetag: 13.08.2003
(51) Int. Cl.: B60T 17/22

(54) **VERFAHREN ZUR ÜBERPRÜFUNG DER ENTLÜFTUNGSGÜTE EINES ELEKTROHYDRAULISCHEN BREMSSYSTEMS**
METHOD FOR MONITORING THE AIR BLEEDING QUALITY OF AN ELECTROHYDRAULIC BRAKING SYSTEM
PROCEDE DE CONTROLE DE LA QUALITE DE LA PURGE D'AIR D'UN SYSTEME DE FREINAGE ELECTRO-HYDRAULIQUE

(30) Priorität: 13.08.2002 DE 10236971; 28.03.2003 DE 10308737
(43) Veröffentlichungstag der Anmeldung: 18.05.2005
(73) Patentinhaber: Continental Teves AG & Co. oHG, 60488 Frankfurt am Main (DE)
(72) Erfinder: BUSCHMANN, Gunther, 65510 Idstein (DE); BAECHLE, Martin, 61479 Glashütten 1 (DE); WAGNER, Axel, 36381 Schlüchtern (DE); HITZEL, Michael, 63322 Rödermark (DE)
(86) Internationale Anmeldenummer: PCT/EP2003/008984
(87) Internationale Veröffentlichungsnummer: WO 2004/016488

(56) Entgegenhaltungen:
- EP-A- 0 829 648
- WO-A-90/02066
- US-A- 5 767 397
- US-A- 5 908 983

## Beschreibung

Die Erfindung bezieht sich auf ein Verfahren zur Überprüfung der Entlüftungsgüte eines elektrohydraulischen Bremssystems, bestehend aus einem pedalbetätigten Hauptbremszylinder und einem vom Hauptbremszylinderdruck geregelten Bremskreis mit einer Pumpe, deren Saugseite an einen Druckmittelvorratsbehälter angeschlossen ist und einem Hochdruckspeicher, sowie Ein- und Auslassventil für die an den Bremskreis angeschlossenen Radbremsen, wobei der Hauptbremszylinder stromabwärts der Einlassventile an den Bremskreis über ein Trennventil angeschlossen ist.

Ein solches Bremssystem ist mit einer inkompressiblen Bremsflüssigkeit gefüllt. Die Auslegung der einzelnen Komponenten (Hauptbremszylinder, Hochdruckspeicher, Radbremsen, etc.) ist auf die Elastizitäten und Lüftspiele im System abgestimmt. Es berücksichtigt nicht, dass die Bremsflüssigkeit, wenn sie mit Luft oder Wasserdampf angereichert ist, selbst kompressibel wird und zur Elastizität des Systems beiträgt. Die Bremsflüssigkeit muss daher bei einem konventionellen System regelmäßig ausgetauscht werden. Bei einem elektrohydraulischen Bremssystem ist dies zwar auch notwendig, das System verhält sich aber gegenüber einer Luftanreicherung der Bremsflüssigkeit tolerant, da die Pumpe und der Hochdruckspeicher genügend Druckmittel zur Verfügung stellen können, um eine vergrößerte Volumenaufnahme auf Grund von Lufteinschlüssen kompensieren zu können. Wenn aber das elektrohydraulische Bremssystem in den konventionellen Modus schaltet, weil z. B. die Pumpe oder der Hochdruckspeicher ausgefallen sind, so wirkt sich die Kompressibilität der Bremsflüssigkeit negativ aus. Da der Pedalweg begrenzt ist, kann auch nur noch ein bestimmter Bremsdruck erreicht werden, der, je nachdem wie stark die Bremsflüssigkeit mit Luft oder Wasserdampf angereichert ist, nicht mehr ausreicht, um die gesetzlich vorgeschriebene Bremsverzögerung eines Fahrzeuges zu erzielen. Eine Pedalwegverlängerung, mit der bei dem konventionellen System eine Gasanreicherung vom Fahrer sensiert werden kann, ist bei dem elektrohydraulischen System nicht zwingend vorhanden, da die Radbremse vom Pedalbereich durch Schalten der Trennventile abgetrennt ist.

Elektrohydraulische Bremssysteme sehen daher Überwachungsmodi vor, die beim laufenden Betrieb eingesetzt werden und versuchen, aus dem Verhalten des Systems Rückschlüsse auf die Luftanreicherung zu erhalten. Diese Überwachungsmodi haben den Nachteil, dass einige Parameter, die für die Bestimmung der Luftanreicherung notwendig sind, nicht genau genug festgelegt werden können, so dass Rückschlüsse aus den gewonnenen Daten auf den Zustand des Systems nur bedingt möglich sind. So ist z. B. das Lüftspiel der Bremsbeläge gegenüber den Bremsscheiben auf Grund der jeweiligen Fahrsituation dynamisch verändert und damit unbestimmt. Es unterscheidet sich auch deutlich vom statischen Lüftspiel, das sich bei einem stehenden Fahrzeug nach einer Bremsbetätigung in relativ engen Grenzen reproduzierbar einstellt.

Außerdem ist nicht immer auszuschließen, dass nach einem fehlerhaft ausgeführten Bremsflüssigkeitswechsel eingeschlossene Luft im Bremssystem vorhanden ist. Der Lufteinschluss sollte nach einem Bremsflüssigkeitswechsel möglichst noch vor Antritt der Fahrt festgestellt werden können.

Dokument US 5 908 983 A offenbart ein Verfahren zur Überprüfung der Bremsanlage eines Fahrzeugs.

Die Erfindung beruht somit auf dem Problem, ein Verfahren zur Überprüfung der Entlüftungsgüte eines elektrohydraulischen Bremssystems zu entwickeln, bei dem die Luft- oder Gasbelastung der Bremsflüssigkeit oder der Einschluss von Luftblasen sicher detektiert werden kann. Dazu sieht das Verfahren die folgenden Schritte vor.
a.) Entleeren des Hochdruckspeichers.
b.) Erneutes Befüllen des Hochdruckspeichers, währenddessen der Füllgrad des Hochdruckspeichers und der Volumenstrom durch die Pumpe bestimmt wird.
c.) Vergleich der dabei ermittelten Ist-Werte mit Sollvorgaben.
d.) Betätigen des Bremspedals bei geschlossenen Trennventilen, so dass die an den Bremskreis angeschlossenen Radbremsen definiert mit Druck beaufschlagt werden.
e.) Lösen des Bremspedals.
f.) Erneutes Betätigen des Bremspedals, wobei wenigstens die folgenden Daten erfasst werden:
   Pedalweg,
   Hauptbremszylinderdruck,
   Radbremszylinderdruck,
   Druckmittelentnahme aus dem Hochdruckspeicher.
g.) Bestimmen der Volumenaufnahme des Hauptbremszylinders und der bis zum Trennventil reichenden Leitung anhand des ermittelten Pedalweges und des Hauptbremszylinderdruckes und Vergleich mit den Sollwerten.
h.) Bestimmen der Volumenaufnahme des druckbeaufschlagten Bremskreises anhand der Druckmittelentnahme aus dem Hochdruckspeicher und der Radbremszylinderdrücke und Vergleich mit den Sollwerten.
i.) Ausgabe einer geeigneten Warnung, wenn vorgegebene Kriterien nicht erfüllt sind.

Im Prinzip wird das System in definierter Weise mit Druck beaufschlagt und dabei die Volumenaufnahme gemessen. Das Einstellen des Druckes erfolgt nur durch Druckaufbau, ohne Druckabbau. Allerdings ist es dazu notwendig, dass das Bremssystem zuvor in einen Normalzustand versetzt wird, so dass für die folgenden Berechnungen vorausgesetzt werden kann, dass bestimmte Parameter in engen Grenzen vorliegen. Dazu wird zunächst der Hochdruckspeicher entleert und danach erneut befüllt, wobei währenddessen der Füllgrad des Hochdruckspeichers und der Volumenstrom durch die Pumpe bestimmt wird. Auf diese Weise erhält man zunächst einen definierten Füllgrad des Hochdruckspeichers, andererseits lassen sich Ist-Werte hinsichtlich des Volumenstroms und des Füllgrades des Hochdruckspeichers mit Soll-Vorgaben vergleichen.

Ergeben sich hier Abweichungen, so kann daraus geschlossen werden, dass an der Saugseite der Pumpe, also in dem Leitungsbereich zwischen der Pumpe und dem Druckmittelvorratsbehälter, ein Lufteinschluss vorhanden war und ggf. noch ist, worauf eine entsprechende Warnung herausgegeben werden kann.

Auch das Betätigen des Bremspedals nach Schritt d.) und anschließendem Lösen des Bremspedals bewirkt, dass insbesondere das Lüftspiel der Radbremsen sowie die Lage der Dichtmanschetten im Hauptbremszylinder eine in guter Näherung abschätzbare Größe einnehmen.

Eine erneute Betätigung des Bremspedals, wobei gleichzeitig eine gesteuerte Bremsbetätigung einsetzt, dient der Messung von Druck und Volumenaufnahme, wozu gemäß Teilschritt f.) der Pedalweg des Hauptbremszylinderdrucks die Radbremsdrücke und die Druckmittelentnahme aus dem Hochdruckspeicher bestimmt werden. Aus dem Vergleich des Pedalweges mit dem Hauptbremszylinderdruck lässt sich die Volumenaufnahme des Hauptbremszylinders und der bis zum Trennventil reichenden Leitungen ermitteln. Auch hier kann ein Vergleich mit Sollwerten erfolgen. Die Bestimmung der Volumenaufnahme des druckbeaufschlagten Bremskreises erfolgt anhand der Druckmittelentnahme aus dem Hochdruckspeicher und der Radbremszylinderdrücke, die wiederum mit Sollwerten verglichen werden. Abweichungen lassen Rückschlüsse auf die Luftbelastung bzw. den Einschluss von Luftblasen zu. Damit die dazu notwendigen Modellrechnungen auf einer sicheren Basis beruhen, werden die Vergleiche nur dann durchgeführt, wenn ein Hauptbremszylinderdruck, z. B. > 15 bar beträgt und eine maximale Pedalbetätigungsgeschwindigkeit von < 10 mm/s eingehalten wurde. Der Druckaufbau in den Radbremsen soll > 30 bar betragen. In solchen Fällen können die Messwerte mit hinreichender Genauigkeit bestimmt werden und vorausgesetzt werden, dass Modellannahmen hinsichtlich der Volumenaufnahme mit hinreichender Genauigkeit zutreffen.

Das Verfahren soll auch nur dann durchgeführt werden, wenn die Temperatur der Bremsanlage in einem vorgegebenen Normalbereich liegt und etwa +10 °C bis +30 °C beträgt.

Zur Nachvollziehbarkeit der Ergebnisse werden diese in einen auslesbaren elektronischen Speicher übertragen.

Im Folgenden wird an Hand eines Ausführungsbeispiels die Erfindung näher erläutert. Dazu zeigen:
- Fig. 1: den hydraulischen Schaltplan einer hy- draulischen Bremsanlage und
- Fig. 2: einen Ablaufplan des erfindungsgemäßen Verfahrens.

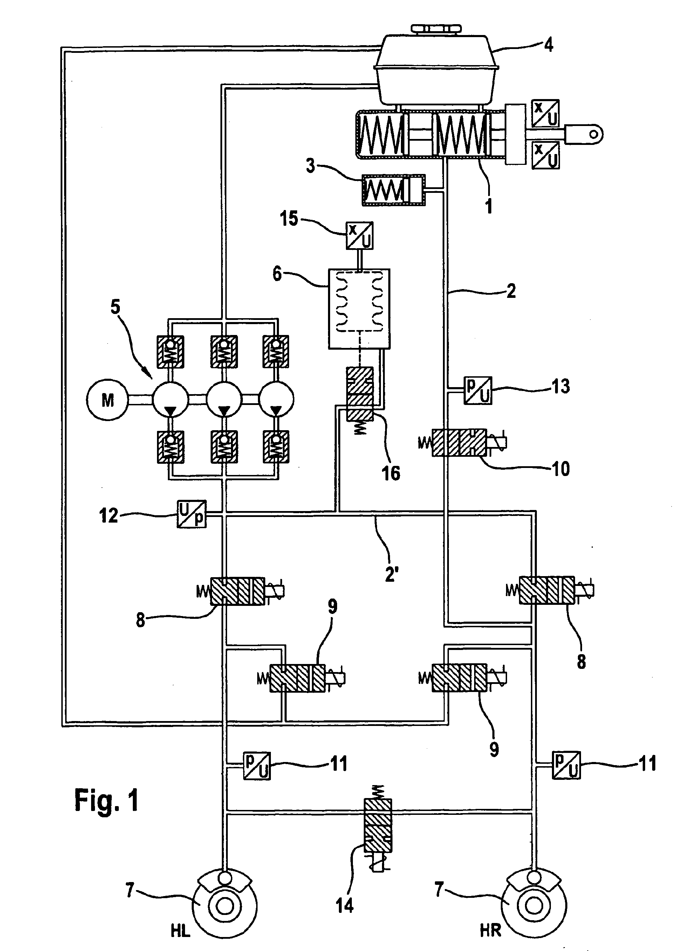

Es wird zunächst auf die Fig. 1 Bezug genommen. Diese zeigt eine typische elektrohydraulische Bremsanlage, die wie folgt aufgebaut ist:
Ein Hauptbremszylinder in Tandemform besitzt zwei Bremskreise, von denen einer dargestellt ist, wobei der dargestellte primäre Bremskreis 2 mit einem Pedalwegsimulator 3 verbunden ist. Außerdem ist ein Druckmittelvorratsbehälter 4 an dem Hauptbremszylinder 1 angeschlossen. Motorisch angetriebene Pumpen 5 und ein Hochdruckspeicher, z. B. ein Metallfaltenbalgspeicher 6, bilden ein Druckversorgungssystem, das aus dem Druckmittelvorratsbehälter 4 mit einem Druckmittel (Bremsflüssigkeit) versorgt wird. Die Radbremsen 7 der Hinterachse sind über je ein Einlassventil 8 an dieses Druckmittelversorgungssystem angeschlossen und bilden dadurch einen geregelten Bremskreis 2'. Außerdem kann über je ein Auslassventil 9 eine Verbindung zum Druckmittelvorratsbehälter 4 hergestellt werden. Die Einlass- und die Auslassventile 8, 9 sind normalerweise geschlossen. Ein Druckaufbau in den Radbremsen 7 erfolgt durch Öffnen des jeweiligen Einlassventils 8, eine Druckabsenkung durch Öffnen des jeweiligen Auslassventils 9. Auf diese Weise ist ein geregelter Bremskreis 2' gebildet, wobei der den Radbremsen 7 zur Verfügung gestellte Druck vom Hauptbremszylinderdruck bestimmt ist, wobei der Hauptbremszylinder 1 aber bei geregelter Bremsung hydraulisch von den Radbremsen 7 getrennt ist. Dazu befindet sich in der Leitung, die stromabwärts des Einlassventils 8 in die zu den Radbremsen 7 führenden Leitungen mündet, ein Trennventil 10, das im Regelmodus geschlossen wird und nur dann offen bleibt, wenn eine Störung des geregelten Bremskreises 2', z. B. wegen eines Ausfalles der Druckmittelversorgung, vorliegt.

Das System wird u. a. durch diverse Drucksensoren überwacht und gesteuert. Den einzelnen Radbremsen 7 sind Bremsdrucksensoren 11 zugeordnet, dem Druckmittelversorgungssystem ein Pumpendrucksensor 12 und dem Hauptbremszylinder je Bremskreis ein Simulationsdrucksensor 13. Bei einer elektrohydraulischen Bremsung ist das Trennventil geschlossen. Der Druck im Hauptbremszylinder dient als SteuergrRße. Dazu wird der Druck des Hauptbremszylinders 1 mit dem Simulationsdrucksensor 13 gemessen und als SteuergrRße an die Steuerung des geregelten Bremskreises 2' gegeben. Bei Ausfall des Druckversorgungssystems bleibt das Trennventil 10 geRffnet. Die Radbremsen 7 sind somit in konventioneller Weise unmittelbar mit dem Hauptbremszylinder 1 verbunden. Ein Ausgleichsventil 14 sorgt dabei für einen Druckausgleich zwischen den Radbremsen einer Achse.

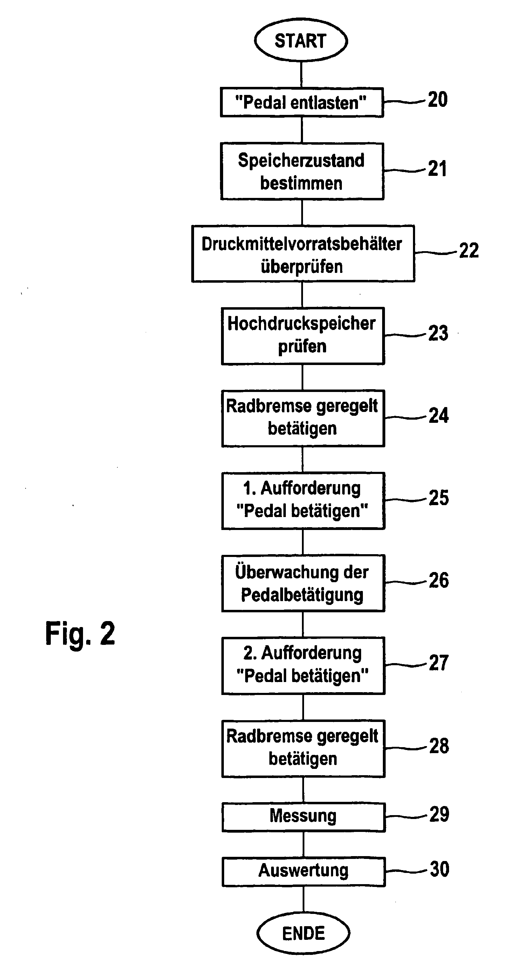

Die Bremsanlage muss regelmäßig gewartet werden, insbesondere muss die Bremsflüssigkeit gewechselt werden. Hierbei kann es zu Fehlern kommen. Z. B. können Anschlüsse vertauscht werden oder aber das Bremssystem nicht richtig entlüftet werden, was zu Lufteinschlüssen führt. Zur Kontrolle des Bremssystems wird daher das folgende Verfahren vorgeschlagen:
Das Verfahren, dessen Ablauf in Fig. 2 schematisch dargestellt ist, wird menugesteuert durchgeführt. Das heißt ein Bordcomputer mit einer Anzeige (Display) führt den Fahrer oder den Monteur bei der Durchführung der einzelnen Schritte: Das Verfahren kann "freiwillig" durchgeführt werden, z. B. auf Veranlassung des Fahrers, indem er ein entsprechendes Menu aufruft. Es kann aber auch zwangsweise durchgeführt werden, indem menugesteuert entsprechende Anweisungen an den Fahrer (Monteur) gegeben werden, die abgearbeitet werden müssen, bevor das Fahrzeug in Betrieb genommen werden kann. In beiden Fällen beginnt das Verfahren mit der Aufforderung (Schritt 20) an den Fahrer, das Bremspedal des Hauptbremszylinders 1 völlig zu entlasten, was anhand der Sensorik feststellbar ist. Voraussetzung für die Einleitung des Verfahrens ist außerdem, dass das Fahrzeug steht.

Danach wird der Speicherzustand mit Hilfe eines Wegsensors 15 am Metallfaltenbalgspeicher 6 ermittelt (Schritt 21). Wenn dieser nicht bis auf eine definierte Restmenge vollständig entleert ist, so dass ein vom Faltenbalg betätigtes Bodenventil 16 geschlossen ist, werden die Ein- und Auslassventile 8, 9 geöffnet, so dass das Druckmittel aus dem Metallfaltenbalgspeicher 6 in den Druckmittelvorratsbehälter 4 abfließt. Des Weiteren wird der Flüssigkeitsstand im Druckmittelvorratsbehälter 4 (Schritt 22) kontrolliert.

Da in diesem Zustand das Bremssystem vollständig drucklos ist, müssen auch alle Drucksensoren 11, 12, 13 im System diesen Zustand registrieren. Das kann dazu genutzt werden, diese Drucksensoren abzugleichen, wobei wenigstens die Einlassventile 8 geöffnet sind, so dass die von den Drucksensoren überwachten Stellen hydraulisch verbunden sind und damit auf einem gleichen Druckniveau liegen. Danach wird der Metallfaltenbalgspeicher 6 geladen (Schritt 23) und dann bei geschlossenem Trennventil 10, geöffneten Einlassventilen 8 und geschlossenen Auslassventilen 11 ein Druck von wenigstens 30 bar in den Radbremsen 7 aufgebaut (Schritt 24). Sollte dabei trotz geöffneter Einlassventile 8 kein Druckaufbau in den Radbremsen 7 erfolgen, ist dies ein Hinweis darauf, dass die Anschlüsse von Leitungen an einem die Ventile 8, 9, 10, 14 beherbergenden Ventilblock vertauscht worden sind. Danach wird der Druck in den Radbremsen 7 durch Öffnen der Auslassventile 9 wieder abgebaut. Das Lüftspiel der Radbremsen 7 erhält dadurch eine definierte Größe.

Danach erhält der Fahrer die Aufforderung, das Pedal langsam, gleichmäßig und kräftig zu betätigen (Schritt 25). Bei der Betätigung ist das Trennventil 10 geschlossen. Der Druckaufbau wird überwacht (Schritt 26), d. h. es sollte wenigstens ein Hauptbremszylinderdruck von etwa 15 bar erreicht werden und die Geschwindigkeit der Pedalbetätigungen sollte 10 mm/s nicht übersteigen. Mit dieser Vorbremsbetätigung wird insbesondere der Hauptbremszylinder 1 und damit die Lage seiner Manschetten in einen Normalzustand versetzt. Danach wird das Pedal wieder gelöst. Das Bremssystem befindet sich nun in einem Grundzustand mit vorbekannten Parametern. Werden die genannten Werte nicht eingehalten bzw. erreicht, erfolgt eine erneute Aufforderung.

Danach erfolgt eine zweite Aufforderung, das Pedal zu betätigen (Schritt 27). Auch diese Betätigung wird hinsichtlich der Betätigungsgeschwindigkeit und dem erzielten Druckaufbau überwacht; dabei ist das Trennventil 10 ebenfalls geschlossen. Gleichzeitig erfolgt ein geregelter Druckaufbau in den Radbremsen (Schritt 28), wobei wenigstens ein Druck von 30 bar erreicht wird. Bei dieser Betätigung des Hauptzylinders 1 und dem geregelten Druckaufbau erfolgt eine Messung (Schritt 29) des Pedalweges mittels eines entsprechenden Pedalwegsensors, des Hauptbremszylinderdruckes durch den Simulatordrucksensor 13, der Radbremszylinderdrücke durch die Raddrucksensoren 11 und eine Messung der Volumenaufnahme. Die Volumenaufnahme wird bestimmt durch die Änderung des Füllgrades des Metallfaltenbalgspeichers 6 und der Fördermenge der Pumpen 5. Die gewonnenen Daten werden miteinander kombiniert und mit Sollwerten verglichen (Schritt 30). Dieser Vergleich ermRglicht es, sicher festzustellen, ob die Bremsflüssigkeit mit Luft belastet ist, oder aber Lufteinschlüsse vorhanden sind.

Bei jedem der oben genannten Schritte werden jeweils alle relevanten Messgrößen überwacht und mit Sollgrößen verglichen, werden jeweils Abweichungen festgestellt, werden entweder Schritte wiederholt, Warnmeldungen generiert, und bei sehr schwerwiegenden Fehlern eine Inbetriebnahme des Fahrzeuges unterbunden.

Fehlermeldungen können z. B. sein: "Anlage defekt", "Leitungen vertauscht", "Anlage schlecht entlüftet" oder "Pumpenleistung zu gering".

## Patentansprüche

1. Verfahren zur Überprüfung der Entlüftungsgüte eines elektrohydraulischen Bremssystems, bestehend aus einem pedalbetätigten Hauptbremszylinder und einem vom Hauptbremszylinderdruck geregelten Bremskreis mit einer Pumpe, deren Saugseite an einen Druckmittelvorratsbehälter angeschlossen ist und einem Hochdruckspeicher, sowie Ein- und Auslassventil für die an den Bremskreis angeschlossenen Radbremsen, wobei der Hauptbremszylinder stromabwärts der Einlassventile an den Bremskreis über ein Trennventil angeschlossen ist, mit den folgenden Schritten
a.) Entleeren des Hochdruckspeichers.
b.) Erneutes Befüllen des Hochdruckspeichers, währenddessen der Füllgrad des Hochdruckspeichers und der Volumenstrom durch die Pumpe bestimmt wird.
c.) Vergleich der dabei ermittelten Ist-Werte mit Sollvorgaben.
d.) Betätigen des Bremspedals bei geschlossenen Trennventilen, so dass die an den Bremskreis angeschlossenen Radbremsen definiert mit Druck beaufschlagt werden.
e.) Lösen des Bremspedals.
f.) Erneutes Betätigen des Bremspedals, wobei wenigstens die folgenden Daten erfasst werden:
Pedalweg,
Hauptbremszylinderdruck,
Radbremszylinderdruck,
Druckmittelentnahme aus dem Hochdruckspeicher.
g.) Bestimmen der Volumenaufnahme des Hauptbremszylinders und der bis zum Trennventil reichenden Leitung anhand des ermittelten Pedalweges und des Hauptbremszylinderdruckes und Vergleich mit den Sollwerten.
h.) Bestimmen der Volumenaufnahme des druckbeaufschlagten Bremskreises anhand der Druckmittelentnahme aus dem Hochdruckspeicher und der Radbremszylinderdrücke und Vergleich mit Sollwerten.
i.) Ausgabe einer geeigneten Warnung, wenn die vorgegebenen Kriterien nicht erfüllt sind.

2. Verfahren nach Anspruch 1, **dadurch gekennzeichnet, dass** die Pedalbetätigung hinsichtlich der Betätigungsgeschwindigkeit und des erzielten Hauptbremszylinderdruckes überwacht wird und das Verfahren jeweils nur fortgesetzt wird, wenn bestimmte Grenzwerte eingehalten werden.

3. Verfahren nach Anspruch 1, **dadurch gekennzeichnet, dass** die Temperatur der Bremsanlage bestimmt wird und das Verfahren nur dann durchgeführt wird, wenn dies in einem vorgegebenen Normalbereich liegt.

4. Verfahren nach einem der vorhergehenden Ansprüche, **dadurch gekennzeichnet, dass** das Ergebnis des Vergleichs in einem auslesbaren elektronischen Speicher gespeichert wird.

## Claims

1. Method for checking the air bleeding quality of an electrohydraulic brake system, comprising a pedal-actuated master brake cylinder and comprising a brake circuit which is controlled by the master brake cylinder pressure and which has a pump whose suction side is connected to a pressure medium reservoir, and comprising a high-pressure accumulator and an inlet and outlet valve for the wheel brakes connected to the brake circuit, with the master brake cylinder being connected to the brake circuit downstream of the inlet valves via a separating valve, having the following steps
a.) Emptying of the high-pressure accumulator.
b.) Re-filling of the high-pressure accumulator, during which the filling level of the high-pressure accumulator and the volume flow through the pump are determined.
c.) Comparison of the actual values thereby determined with setpoint values.
d.) Actuation of the brake pedal with the separating valves closed, such that the wheel brakes connected to the brake circuit are acted on with pressure in a defined manner.
e.) Release of the brake pedal.
f.) Renewed actuation of the brake pedal, with at least the following data being measured:
pedal travel,
master brake cylinder pressure,
wheel brake cylinder pressure,
pressure medium extraction from the high-pressure accumulator.
g.) Determination of the volume intake of the master brake cylinder and of the line extending to the separating valve on the basis of the determined pedal travel and the master brake cylinder pressure and comparison with the setpoint values.
h.) Determination of the volume intake of the pressurized brake circuit on the basis of the pressure medium extraction from the high-pressure accumulator and the wheel brake cylinder pressures and comparison with setpoint values.
i.) Output of a suitable warning if the predefined criteria are not met.

2. Method according to Claim 1, **characterized in that** the pedal actuation is monitored with regard to actuation speed and the obtained master brake cylinder pressure, and the method is continued in each case only if certain limit values are adhered to.

3. Method according to Claim 1, **characterized in that** the temperature of the brake system is determined and the method is carried out only when said temperature lies within a predefined normal range.

4. Method according to one of the preceding claims, **characterized in that** the result of the comparison is stored in a readable electronic memory.

## Revendications

1. Procédé de contrôle de la qualité de la purge d'air d'un système de freinage électrohydraulique, constitué d'un cylindre de freinage principal actionné par pédale et d'un circuit de freinage régulé par la pression du cylindre de freinage principal avec une pompe, dont le côté d'aspiration est raccordé à un réservoir de fluide sous pression et avec un accumulateur haute pression ainsi qu'une soupape d'entrée et de sortie pour les freins de roue raccordés au circuit de freinage, le cylindre de freinage principal étant raccordé au circuit de freinage en aval des soupapes d'admission par le biais d'une soupape de séparation,
comprenant les étapes consistant à :
a) vider l'accumulateur haute pression,
b) remplir à nouveau l'accumulateur haute pression, tandis que le degré de remplissage de l'accumulateur haute pression et le débit volumique sont déterminés par la pompe,
c) comparer les valeurs actuelles détectées en l'occurrence avec des valeurs de consigne prédéfinies,
d) actionner la pédale de frein lorsque les soupapes de séparation sont fermées, de sorte que les freins de roue raccordés au circuit de freinage soient sollicités en pression de manière définie,
e) relâcher la pédale de frein,
f) actionner à nouveau la pédale de frein, au moins les données suivantes étant détectées:
course de la pédale de frein,
pression du cylindre de freinage principal,
pression du cylindre de frein de roue,
prélèvement de fluide sous pression hors de l'accumulateur haute pression,
g) déterminer l'augmentation de volume du circuit de freinage principal et de la conduite s'étendant jusqu'à la soupape de séparation à l'aide de la course de la pédale déterminée et de la pression du cylindre de freinage principal et comparer avec les valeurs de consigne,
h) déterminer l'augmentation de volume du circuit de freinage sollicité par pression à l'aide du prélèvement de fluide sous pression hors de l'accumulateur haute pression et des pressions des cylindres de frein de roue, et comparer avec des valeurs de consigne,
i) fournir un avertissement approprié quand les critères prédéfinis ne sont pas satisfaits.

2. Procédé selon la revendication 1, **caractérisé en ce que** l'actionnement de la pédale est contrôlé en termes de vitesse d'actionnement et de la pression de cylindre de freinage principal et le procédé n'est poursuivi que lorsque des valeurs limites déterminées sont respectées.

3. Procédé selon la revendication 1, **caractérisé en ce que** la température de l'installation de freinage est déterminée et le procédé n'est mis en oeuvre que lorsqu'elle se trouve dans une plage normale prédéfinie.

4. Procédé selon l'une quelconque des revendications précédentes, **caractérisé en ce que** le résultat de la comparaison est mémorisé dans une mémoire électronique lisible.
